(19) **Europäisches Patentamt European Patent Office Office européen des brevets**

(11) **EP 1 206 835 B1**

(12) **EUROPEAN PATENT SPECIFICATION**

(45) Date of publication and mention of the grant of the patent:
**24.09.2008 Bulletin 2008/39**

(21) Application number: **00963242.3**

(22) Date of filing: **24.07.2000**

(51) Int Cl.:
*H03H 2/00* (2006.01)

(86) International application number:
**PCT/TR2000/000042**

(87) International publication number:
**WO 2001/008303 (01.02.2001 Gazette 2001/05)**

(54) **NEAR FIELD NOISE ATTENUATOR**

NAHFELD-RAUSCHDÄMPFER

ATTENUATEUR DE BRUIT CHAMP PROCHE

(84) Designated Contracting States:
**AT BE CH CY DE DK ES FI FR GB GR IE IT LI LU MC NL PT SE**
Designated Extension States:
**AL LT LV MK RO SI**

(30) Priority: **23.07.1999 TR 9901773**

(43) Date of publication of application:
**22.05.2002 Bulletin 2002/21**

(73) Proprietor: **Arçelik A.S.**
**81719 Istanbul (TR)**

(72) Inventors:
• **ERGÜN, Mithat**
**Topkapi,**
**34020 Istanbul (TR)**
• **ÖZTÜRK, Cüneyt,**
**Türk Elektrik Endüstrisi A&Scedil**
**Topkapi,**
**34020 Istanbul (TR)**

(56) References cited:
**DE-A1- 4 109 814**     **US-A- 3 171 996**
**US-A- 5 397 950**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

Hereby invention is concerned with a near field noise attenuator having the function of attenuating air noise which, as a result of rotor rotating in the air gap between stator and rotor, is brought about in electric motors, especially in those having salient poles.

PRIOR ART

As known, the "acoustical near field" is the hydrodynamic field where propagation of sound waves does not manifest itself in any discernible sound motion and where sound pressure continuously displays fluctuations. Such a variability of sound pressure may within this hydrodynamic field be patterned both in space and time interval by setting down Helmholtz equations.

Motors with salient poles are electric motors with poles approaching towards armatures. Among motors to be included into such a class, there may be listed switch reluctance motors and shaded-pole motors.

In salient pole motors, any asymmetric propagation that occurs in the air gap between stator and rotor causes noise and pressure fluctuations to a large extent within that air gap.

In the applications heretofore undertaken, it is aimed to correct flow characteristics. Ways of reducing pressure fluctuations and reducing noise therefrom using various arrangements so as to form a symmetric structure along flow paths have been studied.

Noise originating from pressure fluctuations formed in the air gap of salient-pole electric motors due to rotor and stator irregular surface profiles has caused designers to seek solutions.

Some applications are known directed to reducing the effects of the irregularities on rotor surfaces. Among applications current in the art, there may be listed the folio wrapping of rotor surface, wrapping the rotor with complete injection, or squeezing of rotor ducts with plastic bars or pressurized paper and closing with an appropriate flat plate complying with air gap profile the space between stator poles.

Such practices have as object the making of rotor and stator surfaces regular and smooth, to ensure smooth flow and to reduce to a minimum pressure fluctuations.

OBJECT OF THE INVENTION

The object of the present invention is to bring about a near field noise attenuator which attenuates noise originated by pressure fluctuations due to irregular stator and rotor surface profiles in the air gap in electric motors with salient poles by attenuating_such pressure fluctuations.

BRIEF EXPLANATIONS OF FIGURES

A preferred configuration of the near field noise attenuator brought about for the attainment of the invention object has been given as annex in attached drawings, where

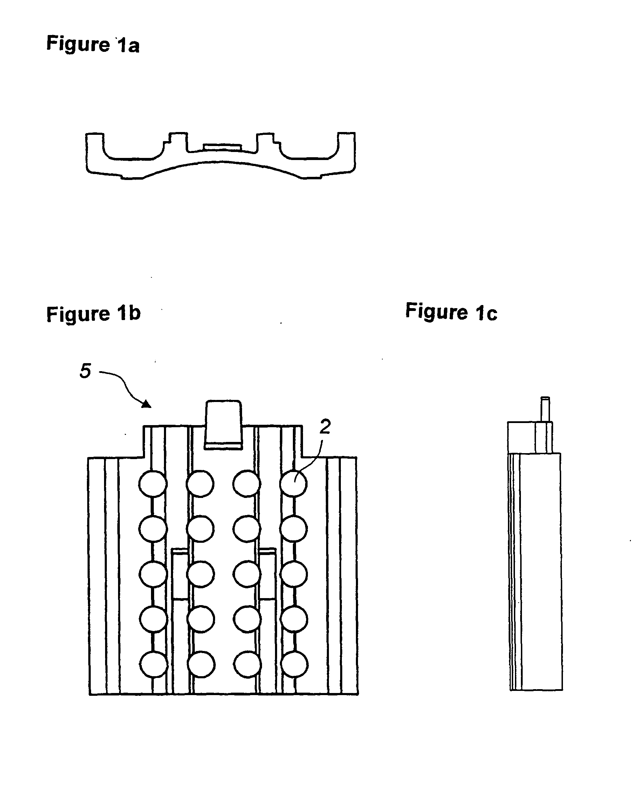

Figure 1a is the top view of the larger piece of the noise attenuator

Figure 1b is the front view of the larger piece of the noise attenuator

Figure 1c is the side view of the larger piece of the noise attenuator

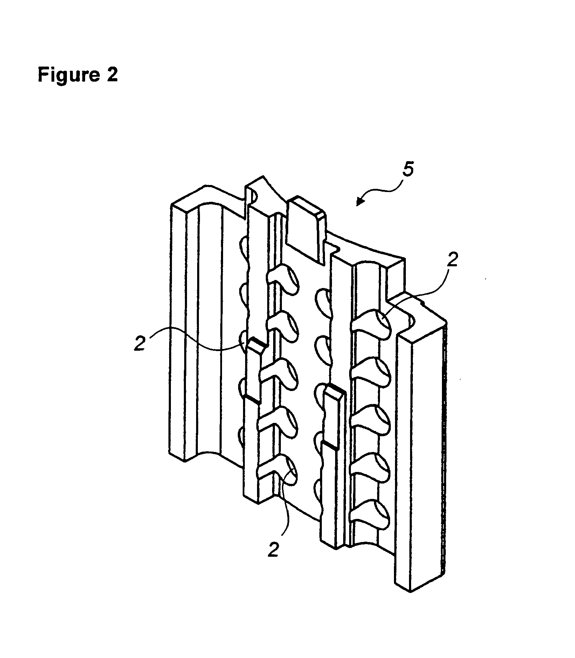

Figure 2 is the three - dimensional top view of the larger piece of the noise attenuator

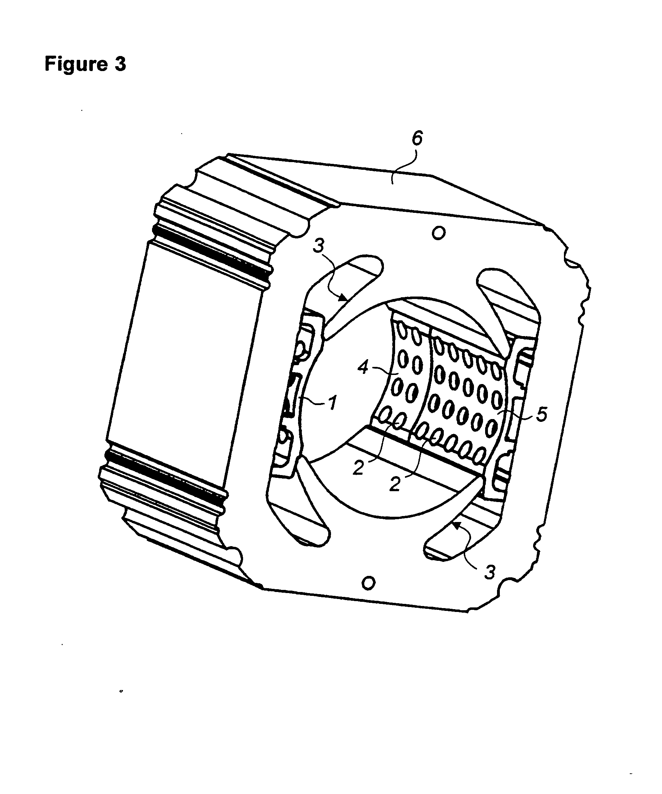

Figure 3, is the three-dimensional top view showing the stator mounted with the noise attenuator

Figure 4, is the front view with stator mounted with noise attenuator

Figure 5, is a sectional view taken along line AA of the figure 4.

Names assigned to parts numbered in figures are as shown under;

1. Attenuator

2. Perforation

3. Salient pole

4. Attenuator small piece

5. Attenuator larger piece

6. Stator

DESCRIPTION OF THE INVENTION

While in the current applications , it is aimed to have continuous and smooth rotor and stator surfaces, to ensure regular flow and maintaining the same and by these ways attenuating pressure fluctuations to a minimum, in the present invention it is aimed on to attenuate pressure fluctuations formed in due to the fluid dynamic characteristics.

The operational principle of the noise attenuator (1) is based upon attenuating before propagation and in the near field of hydrodynamics of sound waves and therefrom upon attenuating sound pressure fluctuations. What is recommended in the invention is into a correction over flow paths, but rather an improvement brought at the source of a physical formation.

The noise attenuator (1), by being located between edges of salient poles at stators of salient-pole motors, provides attenuating air-borne noise formed as a result of rotor's rotating.

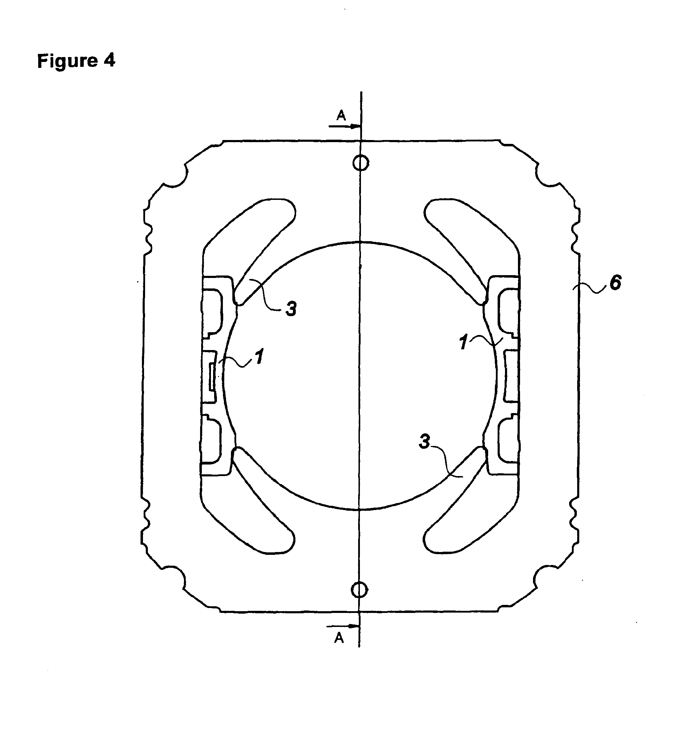

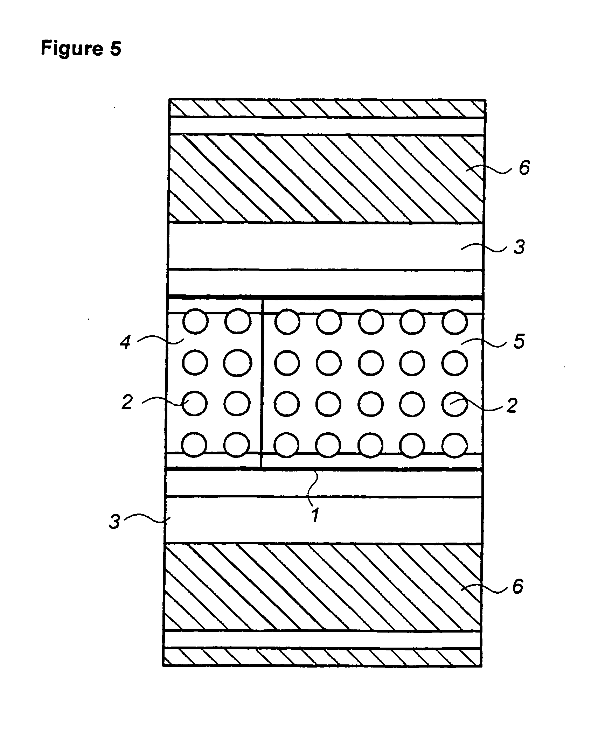

The subject noise attenuator of the invention is formed of a perforated structure between stator (6) and rotor, around the latter (Figures 4 and 5). The noise attenuator (1) is characterized by perforations on it arranged in lines in number more than one which are located parallel to each other.

On the figures attached, there is shown a noise attenuator (1) located in stator of a salient-pole motor used in washing machines. In the preferred above configuration of the attenuator, the perforations are located (2) at a distance equal to each other and there exist in total twenty eight perforations if the gap between salient poles (3) is considered as being a rectangle, of these perforations seven is placed along the long edge of the rectangle, and four along the shorter edge. Tests performed verifies that noise attenuation efficiency is the best if perforations are circular. However, such perforations may be in variety of any geometrical form as desired.

In parallel with sizes of salient-pole motors, manufactured for different aims, number of perforations as well as sizes of noise attenuator may vary. Variation also may be considered in locating perforations in lines.

The function of the subject invention is independent of materials used in its manufacturing. Various metals, sheets or plastic may be used for the purpose.

In order to join opposite ends of salient poles (3) situated symmetrically on stator (6), two noise attenuators (1) are used. These are mounted by close fitting. In the preferred embodiment of the invention, in order to make connection of the terminals easier in the course of mounting of salient-pole motor, the noise attenuator has been formed of two separate pieces fitting each other, (4 and 5) one of which being smaller than the other one. Perforations on the smaller piece (4) fitted to the larger one (5) during the mounting operation, are placed in rows in conformity with the attenuator's shape.

The efficiency of the noise near field attenuator varies in relation with the attenuator's geometry, type of positioning and number of perforations. In accordance with source of aerodynamic formations and characteristics, the noise attenuator can be tuned to the desired frequencies and bands. Tuning or adjustment of the system according to frequencies where noise is suppressed may be ascertained by perforations geometry (2), sizes and numbers of perforations thus opened.

The efficiency of attenuating noise of the perforations noise attenuator is directly proportional to attenuator's peripheral length, number of perforations the same contains and depth of perforations and inversely proportional to wave lengths and perforations cross-sectional area. Thus by using the formula (1),
Where

P    is the number of perforations
I    Peripheral length of acoustical attenuator
A    perforations' sectional area
L I    Efficiency of attenuating noise of the noise attenuator
h    perforations' depth
λ    sound wave length

$$\Delta L_I = \frac{P}{A} l \frac{2h}{\chi} \qquad (1)$$

it is possible to estimate efficiency of attenuating noise of the subject attenuator.

Moreover, it is also of importance angles of reflection and transmission from perforations' structure of sound waves.

If it is considered

$$P_i = P_i e^{j\omega t + K_1} \qquad (2)$$

$$P_R = P_R e^{-j\omega t + K_1} \qquad (3)$$

$$P_T = P_T e^{j\omega t + K_0} \qquad (4)$$

$P_T = P_1 + P_R$. If $\theta_0$ is incoming wave angle : angle of reflected wave.

$\theta_1$ = is incident wave angle

than

$$\frac{\sin \theta_1}{\sin \theta_0} = \frac{z_a}{z_0} \qquad (5)$$

Here, according to the equations below,

$$z_0 = \rho_0 c = \frac{P_i}{V_i} \qquad (6)$$

$$z_a = \rho_a c = \frac{P_T}{V_T} \qquad (7)$$

there will be noticed that angles of positioning are critically important on the angles of incidence, reflection and transmission. Due to these reasons, the efficiency of the noise attenuator will vary in relation with;

- Diameters, sectional areas and bore depths of perforations

- Number of perforations and their positioning

- Peripheral length of noise attenuator and its distance from noise source

- Angles of positioning of attenuator and perforations

Another characteristic of the near-field noise attenuator, that it is applied more easily compared against alternative systems and its lower cost.

## Claims

1. A near field noise attenuator inserted between the salient poles (3) of a stator to attenuate air noise formed as a result of rotor rotating in the air gap between stator and rotor of electric motors, especially of salient-pole electric motors, **characterized in that** the noise attenuator comprises perforations on it arranged in lines in number more than one on a set (1) constituting a perforated structure between rotor and stator in the periphery of this former.

2. A noise attenuator as specified in claim 1, **characterized in that** the perforations have circular shape.

3. A near field noise attenuator as specified in claims 1 and 2, **characterized in that** perforations are lined up in parallel with each other, with rows, either vertical or normal in number more than one.

4. A near field noise attenuator as specified in claim 3, **characterized in that** perforations are positioned (2) of equal distance to each other.

## Patentansprüche

1. Nahfeld-Geräuschdämpfer, der zwischen den ausgeprägten Pole (3) eines Ständers eingefügt ist, um Luftgeräusche zu dämpfen, die durch das Drehen eines Läufers in dem Luftspalt zwischen Ständer und Läufer von Elektromotoren entstehen, insbesondere von Elektromotoren mit ausgeprägten Polen, **dadurch gekennzeichnet, dass** der Geräuschdämpfer Perforationen umfasst, die daran in Reihe angeordnet sind, in einer Anzahl von mehr als einer in einem Satz (1), der eine perforierte Struktur zwischen Läufer und Ständer in der Umgebung des ersteren bildet.

2. Geräuschdämpfer nach Anspruch 1, **dadurch gekennzeichnet, dass** die Perforationen eine Kreisform aufweisen.

3. Nahfeld-Geräuschdämpfer nach Anspruch 1 und 2, **dadurch gekennzeichnet, dass** Perforationen parallel zueinander angeordnet sind, mit vertikalen oder horizontalen Reihen in einer Anzahl von mehr als einer.

4. Nahfeld-Geräuschdämpfer nach Anspruch 3, **dadurch gekennzeichnet, dass** die Perforationen in gleichem Abstand voneinander angeordnet (2) sind.

**Revendications**

1. Un champ proche atténuateur de bruit inséré entre les principaux pôles (3) d'un stator pour atténuer le bruit d'air formé à la suite de la rotation du rotor dans l'intervalle d'air entre le rotor et le stator de moteurs électriques, en particulier des principaux pôles moteurs électriques, **caractérisé en ce que** l'atténuateur comprend des perforations dessus en plusieurs lignes sur un ensemble (1) constituant une structure perforée entre le rotor et le stator dans la périphérie de celle-ci.

2. Un atténuateur de bruit selon la Revendication 1 **caractérisé en ce que** les perforations ont une forme circulaire.

3. Un champ proche atténuateur de bruit comme spécifié dans les Revendications 1 et 2, **caractérisé en ce que** les perforations sont alignées en parallèle les unes avec les autres, avec plusieurs lignes, verticales ou normales.

4. Un champ proche atténuateur de bruit comme spécifié dans la Revendication 3, **caractérisé en ce que** les perforations sont positionnées (2) à distance égale les unes aux autres.

**Figure 1a**

**Figure 1b**

**Figure 1c**

5

2

**Figure 2**

## Figure 3

**Figure 4**

**Figure 5**